# EUROPEAN PATENT SPECIFICATION

(11) **EP 1 740 865 B1**
(45) Date of publication and mention of the grant of the patent: **21.11.2007**
(21) Application number: 05732986.4
(22) Date of filing: 11.04.2005
(51) Int. Cl.: F16K 31/524

(54) **CONTROLLING FLUID SUPPLY VALVES**
STEUERUNG VON FLUIDZUFUHRVENTILEN
CONTROLE DE SOUPAPES D'ALIMENTATION DE FLUIDE

(30) Priority: 17.04.2004 GB 0408606
(43) Date of publication of application: 10.01.2007
(73) Proprietor: NORGREN LIMITED, Lichfield Staffordshire WS13 6SB (GB)
(72) Inventor: FOX, Nigel Peter, Rugeley, Staffordshire WS15 1LZ (GB)
(74) Representative: Holmes, Matthew William
(86) International application number: PCT/GB2005/001395
(87) International publication number: WO 2005/100835

(56) References cited:
- EP-A- 1 319 879
- WO-A-02/061516
- US-A- 3 913 621
- US-A- 4 729 406
- PATENT ABSTRACTS OF JAPAN vol. 009, no. 087 (M-372), 17 April 1985 (1985-04-17) & JP 59 215271 A (KOIKE SANSO KOGYO KK), 5 December 1984 (1984-12-05)

## Description

This invention relates to an actuation means for sequential control of a plurality of fluid supply valves. Prior art actuation means according to the preamble of claim 1 are known for instance from WO-A-02/061516.

Sequential control of fluid supply valves may be required in a number of situations. One is where compressed air or vacuum is supplied to a number of inflatable cuffs, typically four, providing varying pressure on a wound. Only one cuff changes state at any one time, and there is normally a predetermined sequence of inflation and deflation of the cuffs. Each cuff is supplied from a manifold, connected to compressed air or vacuum, under the control of its own fluid supply valve, which remains open until the state of the cuff is to be changed. In this situation, it is advantageous to provide operation of the valves in a simple and inexpensive way, without requiring too much power, and with the actuation means being as small as possible. Given these constraints, it is not feasible to provide an individual actuator for each valve, as this will make the actuation means too large, and relatively complex to control.

According to a first aspect of the present invention, an actuation means for sequential control of a plurality of fluid supply valves for controlling fluid flow between a fluid supply and a port comprises a reciprocable linear actuator operative to control all the valves through a rotary drive means, a transmission means and a cam means acting on the valves, the cam means being rotated by the drive means which translates movement of the linear actuator into rotary movement, and the transmission means being arranged between the drive means and the cam means such that the cam means is rotated by the drive means for one direction of movement of the linear actuator, but is not rotated for the other direction of movement of the linear actuator.

Thus, actuation of the linear actuator in one direction rotates the cam means to operate a first valve, which then remains operated when the linear actuator moves in the other direction to return to its original position. Another actuation rotates the cam means to return the first valve to its original position and to operate another valve, and so on. A single actuator can therefore operate all the valves, so that the actuation means can be kept small. The control of the actuator is simple, as any valve can be operated by a given number of actuations of the linear actuator. Further, because the valves remain operated when the actuator returns, no power is required to keep the valves open.

Preferably, the linear actuator comprises a solenoid acting on a non-rotatable member, against the action of a return spring. This keeps the power requirement to a minimum, as a pulse of current is all that is required to actuate the solenoid, which is then returned to its original position by the spring. Alternatively, the linear actuator may comprise a fluid-pressure operated piston acting on a non-rotatable member.

In either case the non-rotatable member has a helical engagement with the drive means, which is free to rotate. The helical engagement is preferably a screw thread. The drive means conveniently comprises a drive ring mounted externally on the non-rotatable member.

The transmission means may comprise a frictional engagement between the drive means and the cam means, which transmits rotary movement in one direction but not the other. Alternatively, the transmission means may comprise a toothed engagement such as ratchet teeth, which transmits rotary movement in one direction but allows the teeth to ride over each other in the other direction. Conveniently, movement is transmitted on the actuation stroke of the linear actuator rather than the return stroke.

The cam means may be a cylindrical member having an actuating cam for operating each valve. It may also have a neutral position, in which none of the valves are actuated. The actuating cams preferably comprise radial projections spaced round the cylindrical member.

Each fluid supply valve preferably comprises a spring-loaded ball valve, which is normally closed to prevent fluid flow to or from the port, and which is opened by movement of a pin operated by the cam.

According to a second aspect of the invention, we provide a series of inflatable cuffs for providing pressure on a wound dressing, a supply of fluid, valve means controlling inflation of the cuffs and an actuation means in accordance with the first aspect of the invention.

According to a third aspect of the invention, we provide a valve assembly for controlling fluid flow between a fluid supply and a plurality of ports the assembly comprising a fluid supply valve for each port and an actuation means in accordance with the first aspect of the invention for sequential control of the valves to control fluid flow between the fluid supply and each port.

An embodiment of the actuation means is illustrated in the accompanying drawings, in which:

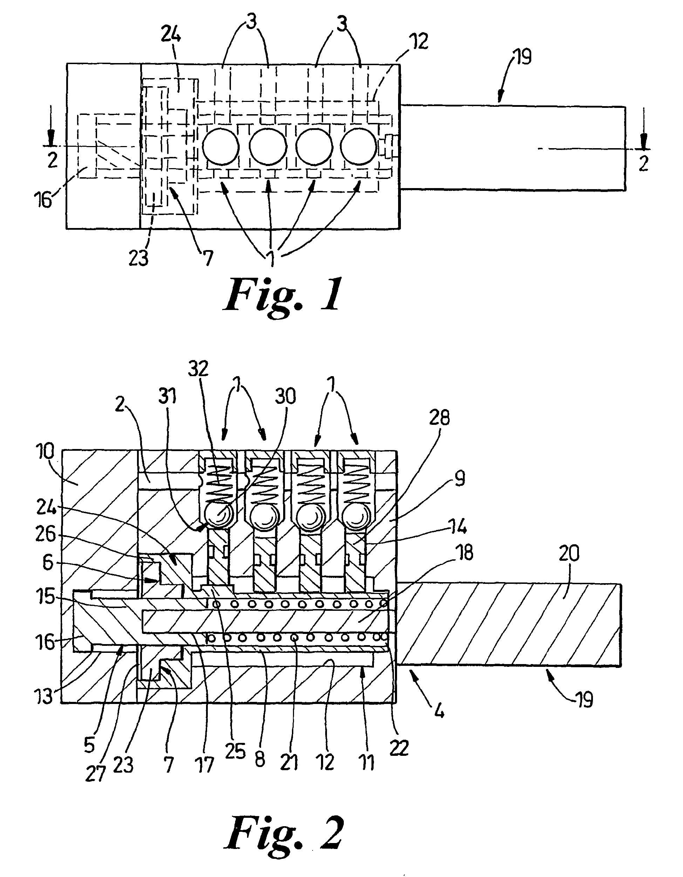

- **Figure 1**: is a plan view of an actuation means; and
- **Figure 2**: is a longitudinal section along the line 2-2 of Figure 1.

The figures show a device for sequential control of a plurality of fluid supply valves 1. Each valve 1 controls the supply of compressed air or vacuum from a manifold 2 to a respective port 3. Each port 3 is connected to an inflatable cuff (not shown) providing pressure on a wound dressing. The cuffs are inflated or deflated sequentially, so that the state of no more than one cuff is changing at any given time. The device has actuation means 4 controlling operation of the valves 1, comprising a linear actuator 5, rotary drive means 6, drive transmission means 7 and cam means 8 which operates the valves 1.

The device comprises a housing body 9 closed by an end cap 10. The actuation means 4 is accommodated in a longitudinal bore 11, comprising a stepped main bore 12 in the housing body 9 and a blind bore 13 in the end cap 10. The housing body 9 also has a set of stepped bores 14, perpendicular to and opening into the main bore 12. Each bore 14 houses a valve 1, to be described in more detail later.

The linear actuator 5 of the actuator means 4 comprises a solenoid-operated plunger 15. The plunger 15 is cylindrical, but has a square end 16 received in the bore 13 in the end cap 10, so that it is non-rotatable. The plunger 15 has a blind bore 17 opening away from the end cap 10, in which is fixed the armature 18 of the solenoid 19. The solenoid coil 20 is provided outside the housing body 9. The plunger 15 is biased towards the end cap 10 by a spring 21 acting between the plunger and a shoulder 22 at the opposite end of the housing body 9.
Externally, the cylindrical part of the plunger 15 has a helical screw-thread formation, which co-operates with a complementary internal screw-thread on the drive means 6.

The drive means 6 comprises a stepped ring 23 accommodated in a larger diameter portion of the bore 12. Linear movement of the plunger 15 in either direction rotates the drive ring 23 correspondingly, by a given angular amount, determined by the amount of the linear movement provided, and the helix angle of the screw-thread formation.

The drive ring 23 co-operates with the cam means 8 for operating the valves 1. The cam means 8 comprises a stepped cylindrical barrel 24 located round the spring 21. The barrel 24 has a radial cam projection 25 for operating each valve 1. Only one projection 25 is shown, as the others are spaced round the barrel 24 at appropriate axial locations to operate the valves.

The barrel 24 has an enlarged end 26 co-operating with the drive ring 23 through the drive transmission means 7, which is not shown in detail. The drive transmission means 7 comprises a toothed arrangement provided on complementary radial surfaces of the drive ring 23 and the end 26, and arranged so that rotary drive is transmitted from the drive ring 23 to the cam barrel 24 in one direction of rotation, but not the other. The drive transmission means therefore operates like a one-way clutch, and may be a ratchet-type toothed arrangement, with the teeth engaging to provide drive for one direction of rotation, but sliding over each other in the other direction of rotation. A clearance 27 is provided between the drive ring 23 and the end cap 10 to allow the teeth to separate. The drive ring 23 therefore has a limited amount of linear movement as well as rotary movement.

Thus, each actuation of the linear actuator 5 rotates the cam barrel 24 by the predetermined amount. The cam projections 25 will be arranged so that the cam barrel 24 has four positions in which only one valve 1 is operated, and a neutral position in which none of the valves 1 is operated. The angular rotation of the cam barrel 24 for each actuation is therefore 72°.

Each cam projection 25 acts on a valve actuation pin 28 working in a respective bore 14, to operate the corresponding valve 1.

Each valve 1 comprises a ball valve member 30 co-operating with a seat 31 formed at an inclined part of the bore 14. A spring 32 acts on the ball valve member 30 to bias it closed. The valve is opened by the actuation pin 28 lifting the ball 30 off the seat 31. When a valve 1 is open it allows fluid flow between the manifold 2 and the port 3. The manifold 2 may be connected, through a control valve (not shown), to a source of compressed air, a vacuum source, or to atmosphere. This allows inflation or deflation of the cuff controlled by the valve 1.

Thus, for operation, we assume that the cam barrel is in its neutral position, with no valves open. The manifold 2 is connected appropriately to the source of compressed air, vacuum or atmosphere. Current is supplied to the solenoid coil 20 as a short pulse. Operation of the solenoid pulls the armature 18 and the plunger 15 outwardly, which in turn pulls the drive ring 23 into engagement with the cam barrel 24. Movement of the plunger 15 also rotates the drive ring 23 and the cam barrel 24 by the given angular amount, as the drive is transmitted to the cam barrel 24 in this direction of movement. Rotation of the cam barrel 24 brings a cam projection 25 into engagement with an actuator pin 28 to open a valve 1 to allow fluid flow to or from the cuff via the port 3.

When the current ceases, the spring 21 returns the plunger 15 and the drive ring 23 to their original position. The clearance 27 ensures that the transmission means 7 disengages, so that the cam barrel 24 does not move. The actuated valve 1 therefore remains open until the next actuation of the solenoid, when that valve will close and another will open (unless the neutral position is required). The device will therefore operate to provide the required pressure at the ports 3, and is very simple in construction and operation, as it is only necessary to provide short pulses of current to the solenoid. Actuation of any given valve 1 can be ensured by an appropriate number of current pulses to the solenoid.

It will be appreciated that the linear actuator 5 could be operated by a piston rather than the solenoid. Similarly, it will be appreciated that the drive transmission means 7 could be modified, and may simply rely on friction rather than a toothed engagement. For example, a friction drive may be in the form of self-releasing tapers on the complementary radial surfaces of the ring 23 and end 26.

It would also be possible for the rotation of the cam barrel 24 to occur on the return stroke of the linear actuator 5 rather than the actuation stroke.

The device can readily be modified to accommodate more or fewer valves. The valves may also be of a different type.

Furthermore, it will be appreciated that the actuator/solenoid may be located either wholly or partially inside or parallel to the cam barrel to reduce the overall length of the actuator means if desired.

## Claims

1. An actuation means (4) for sequential control of a plurality of fluid supply valves (1) for controlling fluid flow between a fluid supply (2) and a port (3) **characterised in that** the actuation means comprises a reciprocable linear actuator (5) operative to control all the valves (1) through a rotary drive means (6), a transmission means (7) and a cam means (8) acting on the valves (1), the cam means (8) being rotated by the drive means (6) which translates movement of the linear actuator (5) into rotary movement and the transmission means (7) being arranged between the drive means (6) and the cam means (8) such that the cam means (8) is rotated by the drive means (6) for one direction of movement of the linear actuator (5), but is not rotated for the other direction of movement of the linear actuator.

2. An actuation means according to claim 1, **characterised in that** the linear actuator comprises a solenoid (19) acting on a non-rotatable member (15) against the action of a return spring (21).

3. An actuation means according to claim 1, **characterised in that** the linear actuator (5) comprises a fluid-pressure operated piston acting on a non-rotatable member.

4. An actuation means according to claim 2 or claim 3, **characterised in that** the non-rotatable member (15) has a helical engagement with the drive means (6).

5. An actuation means according to claim 4, **characterised in that** the helical engagement is a screw thread.

6. An actuation means according to claims 2 to 5, **characterised in that** the drive means (6) comprises a drive ring (23) mounted externally on the non-rotatable member (15).

7. An actuation means according to any preceding claim, **characterised in that** the transmission means (7) comprises a frictional engagement between the drive means (6) and the cam means (8) which transmits rotary movement in one direction but not the other.

8. An actuation means according to any of claims 1 to 6, **characterised in that** the transmission means (7) comprises a toothed engagement which transmits rotary movement in one direction but allows the teeth to ride over each other in the other direction.

9. An actuation means according to claim 8, **characterised in that** the transmission means (7) are ratchet teeth.

10. An actuation means according to any preceding claim, **characterised in that** movement is transmitted on the actuation stroke of the linear actuator.

11. An actuation means according to any preceding claim, **characterised in that** the cam means (8) is a cylindrical member (24) having an actuating cam (25) for operating each valve (1).

12. An actuation means according to claim 11, **characterised in that** the cam means (8) has a neutral position in which none of the valves (1) are operated.

13. An actuation means according to claim 11 or 12, **characterised in that** the actuating cams comprise radial projections (25) spaced around the cylindrical member (24).

14. A series of inflatable cuffs for providing pressure on a wound dressing, a supply of fluid, valve means controlling inflation of the cuffs, and an actuation means according to any preceding claim for controlling the valve means to control fluid flow between the fluid supply and the cuffs.

15. A valve assembly device for controlling fluid flow between a fluid supply and a plurality of ports the assembly comprising a fluid supply valve for each port and an actuation means according to any of claims 1 to 13 for sequential control of the valves to control fluid flow between the fluid supply and each port.

16. A device according to claim 15 **characterised in that** each fluid supply valve (1) comprises a spring-loaded ball valve.

17. A device according to claim 16 **characterised in that** each spring-loaded ball valve is normally closed to prevent fluid flow to or from the port.

18. A device according to claim 17, **characterised in that** each spring-loaded ball valve is opened by movement of a pin (28) operated by the cam means (8).

## Patentansprüche

1. Betätigungsmittel (4) zum sequentiellen Steuern mehrerer Fluidzufuhrventile (1) zum Regeln des Fluiddurchflusses zwischen einem Fluidvorrat (2) und einem Anschluss (3), **dadurch gekennzeichnet, dass** das Betätigungsmittel einen hin und her beweglichen Schubantrieb (5) mit der Aufgabe umfasst, alle Ventile (1) durch ein Drehantriebsmittel (6), ein Übertragungsmittel (7) und eine auf die Ventile (1) wirkende Nockenvorrichtung (8) zu steuern, wobei die Nockenvorrichtung (8) von dem Antriebsmittel (6) in Drehung versetzt wird, das Bewegung des Schubantriebs (5) in Drehbewegung umsetzt, und wobei das Übertragungsmittel (7) so zwischen dem Antriebsmittel (6) und der Nockenvorrichtung (8) angeordnet ist, dass die Nockenvorrichtung (8) vom Antriebsmittel (6) für eine Bewegungsrichtung des Schubantriebs (5) in Drehung versetzt wird, aber für die andere Bewegungsrichtung des Schubantriebs nicht in Drehung versetzt wird.

2. Betätigungsmittel nach Anspruch 1, **dadurch gekennzeichnet, dass** der Schubantrieb ein Magnetventil (19) umfasst, das gegen die Wirkung einer Rückholfeder (21) auf ein nicht drehbares Element (15) wirkt.

3. Betätigungsmittel nach Anspruch 1, **dadurch gekennzeichnet, dass** der Schubantrieb (5) einen durch Fluiddruck betätigten Kolben umfasst, der auf ein nicht drehbares Element wirkt.

4. Betätigungsmittel nach Anspruch 2 oder Anspruch 3, **dadurch gekennzeichnet, dass** das nicht drebbare Element (15) einen wendelförmigen Eingriff mit dem Antriebsmittel (6) hat.

5. Betätigungsmittel nach Anspruch 4, **dadurch gekennzeichnet, dass** der wendelförmige Eingriff ein Schraubgewinde ist.

6. Betätigungsmittel nach den Ansprüchen 2 bis 5, **dadurch gekennzeichnet, dass** das Antriebsmittel (6) einen Antriebsring (23) umfasst, der extern auf dem nicht drehbaren Element (15) montiert ist.

7. Betätigungsmittel nach einem der vorherigen Ansprüche, **dadurch gekennzeichnet, dass** das Übertragungsmittel (7) einen Friktionseingriff zwischen dem Antriebsmittel (6) und der Nockenvorrichtung (8) umfasst, das Drehbewegung in einer Richtung, aber nicht in der anderen überträgt.

8. Betätigungsmittel nach einem der Ansprüche 1 bis 6, **dadurch gekennzeichnet, dass** das Übertragungsmittel (7) einen Zahneingriff umfasst, der Drehbewegung in einer Richtung überträgt, aber es zulässt, dass die Zähne in der anderen Richtung übereinander laufen.

9. Betätigungsmittel nach Anspruch 8, **dadurch gekennzeichnet, dass** das Übertragungsmittel (7) Sperrzähne sind.

10. Betätigungsmittel nach einem der vorherigen Ansprüche, **dadurch gekennzeichnet, dass** die Bewegung am Betätigungshub des Schubantriebs übertragen wird.

11. Betätigungsmittel nach einem der vorherigen Ansprüche, **dadurch gekennzeichnet, dass** die Nockenbaugruppe (8) ein zylindrisches Element (24) mit einer Betätigungsnocke (25) zum Betätigen jedes Ventils (1) ist.

12. Betätigungsmittel nach Anspruch 11, **dadurch gekennzeichnet, dass** die Nockenbaugruppe (8) eine neutrale Position hat, in der keines der Ventile (1) betätigt wird.

13. Betätigungsmittel nach Anspruch 11 oder 12, **dadurch gekennzeichnet, dass** die Betätigungsnocke radiale Vorsprünge (25) umfasst, die um das zylindrische Element (24) herum beabstandet sind.

14. Serie von aufblasbaren Manschetten zum Erzeugen von Druck auf einen Wundverband, Fluidvorrat, Ventilbaugruppe zum Steuern des Aufblasens der Manschetten und Betätigungsmittel nach einem der vorherigen Ansprüche zum Steuern der Ventilbaugruppe zum Regeln des Fluiddurchflusses zwischen dem Fluidvorrat und den Manschetten.

15. Ventilbaugruppenvorrichtung zum Regeln des Fluiddurchflusses zwischen einem Fluidvorrat und mehreren Anschlüssen, wobei die Baugruppe ein Fluidzufuhrventil für jeden Anschluss und ein Betätigungsmittel nach einem der Ansprüche 1 bis 13 zum sequentiellen Steuern der Ventile umfasst, um den Fluiddurchfluss zwischen dem Fluidvorrat und jedem Anschluss zu regeln.

16. Vorrichtung nach Anspruch 15, **dadurch gekennzeichnet, dass** jedes Fluidzufuhrventil (1) ein federgespanntes Kugelventil umfasst.

17. Vorrichtung nach Anspruch 16, **dadurch gekennzeichnet, dass** jedes federgespannte Kugelventil normalerweise geschlossen ist, um Fluiddurchfluss zu oder von dem Anschluss zu verhindern.

18. Vorrichtung nach Anspruch 17, **dadurch gekennzeichnet, dass** jedes federgespannte Kugelventil durch die Bewegung eines von der Nockenbaugruppe (8) betätigten Bolzens (28) geöffnet wird.

## Revendications

1. Moyen d'actionnement (4) pour le contrôle séquentiel d'une pluralité de vannes d'alimentation en fluide (1) pour le contrôle de l'écoulement du fluide entre une alimentation en fluide (2) et un port (3) **caractérisé en ce que** le moyen d'actionnement comprend un actionneur linéaire réciprocable (5) opératoire pour contrôler toutes les vannes (1) à travers un moyen d'entraînement rotatif (6), un moyen de transmission (7) et un moyen de came (8) agissant sur les vannes (1), le moyen de came (8) étant mis en rotation par le moyen d'entraînement (6) qui traduit le mouvement de l'actionneur linéaire (5) en un mouvement rotatif et le moyen de transmission (7) étant placé entre le moyen d'entraînement (6) et le moyen de came (8) de manière à ce que le moyen de came (8) soit mis en rotation par le moyen d'entraînement (6) pour une direction du mouvement de l'actionneur linéaire (5) mais qu'il ne soit pas mis en rotation pour l'autre direction du mouvement de l'actionneur linéaire.

2. Moyen d'actionnement selon la revendication 1, **caractérisé en ce que** l'actionneur linéaire comprend un solénoïde (19) agissant sur un membre non rotatif (15) contre l'action d'un ressort de rappel (21).

3. Moyen d'actionnement selon la revendication 1, **caractérisé en ce que** l'actionneur linéaire (5) comprend un piston opéré par la pression du fluide agissant sur un membre non rotatif.

4. Moyen d'actionnement selon la revendication 2 ou la revendication 3, **caractérisé en ce que** le membre non rotatif (15) a un engagement hélicoïdal avec le moyen d'entraînement (6).

5. Moyen d'actionnement selon la revendication 4, **caractérisé en ce que** l'engagement hélicoïdal est un filetage de vis.

6. Moyen d'actionnement selon les revendications 2 à 5, **caractérisé en ce que** le moyen d'entraînement (6) comprend une bague d'entraînement (23) montée extérieurement sur le membre non rotatif (15).

7. Moyen d'actionnement selon une quelconque revendication précédente, **caractérisé en ce que** le moyen de transmission (7) comprend un engagement frictionnel entre le moyen d'entraînement (6) et le moyen de came (8) qui transmet le mouvement rotatif dans une direction mais pas dans l'autre.

8. Moyen d'actionnement selon l'une quelconque des revendications 1 à 6, **caractérisé en ce que** le moyen de transmission (7) comprend un engagement denté qui transmet le mouvement rotatif dans une direction mais qui permet aux dents de s'engager l'une sur l'autre dans l'autre direction.

9. Moyen d'actionnement selon la revendication 8, **caractérisé en ce que** le moyen de transmission (7) consiste en des dents à rochet.

10. Moyen d'actionnement selon l'une quelconque des revendications précédentes **caractérisé en ce que** le mouvement est transmis sur le temps d'actionnement de l'actionneur linéaire.

11. Moyen d'actionnement selon l'une quelconque des revendications précédentes, **caractérisé en ce que** le moyen de came (8) est un membre cylindrique (24) ayant une came d'actionnement (25) pour l'opération de chaque vanne (1).

12. Moyen d'actionnement selon la revendication 11, **caractérisé en ce que** le moyen de came (8) a une position neutre dans laquelle aucune des vannes (1) n'est opérée.

13. Moyen d'actionnement selon la revendication 11 ou 12, **caractérisé en ce que** les cames d'actionnement comprennent des projections radiales (25) espacées autour du membre cylindrique (24).

14. Une série de ballonnets gonflables pour l'apport d'une pression sur le pansement d'une blessure, une alimentation en fluide, un moyen de vanne contrôlant le gonflement des ballonnets, un moyen d'actionnement selon l'une quelconque des revendications précédentes pour le contrôle du moyen de vanne en vue de la régulation de l'écoulement du fluide entre l'alimentation en fluide et les ballonnets.

15. Ensemble de vannes pour le contrôle de l'écoulement du fluide entre une alimentation en fluide et une pluralité de ports, l'ensemble comprenant une vanne d'alimentation en fluide pour chaque port et un moyen d'actionnement selon l'une quelconque des revendications 1 à 13 pour le contrôle séquentiel des vannes en vue de la régulation de l'écoulement du fluide entre l'alimentation en fluide et chaque port.

16. Dispositif selon la revendication 15 **caractérisé en ce que** chaque vanne d'alimentation en fluide (1) comporte une vanne à robinet à tournant sphérique à ressort.

17. Dispositif selon la revendication 16 **caractérisé en ce que** chaque robinet à tournant sphérique à ressort est normalement fermé pour empêcher l'écoulement du fluide depuis le port.

18. Dispositif selon la revendication 17, **caractérisé en ce que** chaque robinet à tournant spérique à ressort est ouvert par le mouvement d'une goupille (28) opérée par le moyen de came (8).
